# EUROPÄISCHE PATENTSCHRIFT

(11) **EP 2 686 245 B1**
(45) Veröffentlichungstag und Bekanntmachung des Hinweises auf die Patenterteilung: **30.11.2016**
(21) Anmeldenummer: 12709806.9
(22) Anmeldetag: 15.03.2012
(51) Int. Cl.: B65B 9/13, G06K 19/08

(54) **VERFAHREN UND VORRICHTUNG ZUM HERSTELLEN EINER VERPACKUNGSEINHEIT MIT ZUFALLSMUSTER**
METHOD AND APPARATUS FOR PRODUCING A PACKAGING UNIT WITH A RANDOM PATTERN
PROCÉDÉ ET DISPOSITIF POUR FABRIQUER UNE UNITÉ D'EMBALLAGE

(30) Priorität: 15.03.2011 DE 102011013974
(43) Veröffentlichungstag der Anmeldung: 22.01.2014
(73) Patentinhaber: Maschinenfabrik Möllers GmbH, 59269 Beckum (DE)
(72) Erfinder: AKA, Peter, 59269 Beckum (DE); DIETRICH, Norbert, 53773 Hennef (DE)
(74) Vertreter: Grünecker Patent- und Rechtsanwälte PartG mbB
(86) Internationale Anmeldenummer: PCT/EP2012/001178
(87) Internationale Veröffentlichungsnummer: WO 2012/123126

(56) Entgegenhaltungen:
- DE-A1-102009 022 239
- GB-A- 2 407 424
- GB-A- 2 477 951

## Beschreibung

Die vorliegende Erfindung betrifft ein Verfahren zum Herstellen einer mehrere zu einem Gutstapel gestapelte Verpackungsgegenstände umfassenden Verpackungseinheit sowie eine hierzu geeignete Vorrichtung mit einer Einrichtung zum Umhüllen des Gutstapels umfassend eine Halterung für einen Folienvorrat und Mittel zum Abziehen einer vorbestimmten Länge an Folie von dem Folienvorrat für das Umhüllen des Gutstapels.

Eine solche Vorrichtung ist beispielsweise aus der EP 1 013 549 bekannt. Bei diesem Stand der Technik wird die Folie in Form eines Folienschlauches von dem Folienvorrat zugeführt. Diese Schlauchhaube wird vor dem Überziehen gerefft und danach quer gestretcht, um unter Längsdehnung bei Aufhebung der Reffung beim Umhüllen des Gutstapels vorzugsweise unter elastischer Längsdehnung an die Seitenflächen des Gutstapels angelegt zu werden.

Neben diesem als Haubenstretchen bekannten Vorgehen gibt es auch die Möglichkeit, den Gutstapel mit einer Folie zu umwickeln. Ebenso gut kann eine Schlauchhaube oder ein beidseitig offener Schlauch über den Gutstapel gezogen und thermisch geschrumpft werden. Hierbei stellen sich elastische Verformungsanteile, die durch Recken der Folie erzeugt und rasches Abkühlen der Folie im Herstellungsprozess eingefroren worden sind, zurück, so dass sich die Folie bei Erwärmung zusammenzieht und sich umfänglich dicht um den Gutstapel legt.

Ziel der genannten Verfahren mit Umhüllen des Gutstapels durch eine Folie ist es, eine einheitliche Verpackungseinheit zu schaffen. Diese Verpackungseinheit kann neben der Folie lediglich den aus den Verpackungsgegenständen gebildeten Gutstapel umfassen. Alternativ kann der Gutstapel auch auf einer Palette gestapelt sein, die Teil der Verpackungseinheit wird.

Die so gebildeten Verpackungseinheiten können zu einer Verladungseinheit zusammengefasst werden, die beispielsweise auf der Ladefläche eines LKWs oder in einem Überseecontainer aufgenommen und zum Abnehmer auf den Weg gebracht wird. Häufig bedingt dieser Weg mehrmaliges Umschlagen der Verladungseinheit. Bisweilen wird die Verladungseinheit aufgeteilt; Verpackungseinheiten werden zwischengelagert. Auf dem Weg zum Abnehmer haben weder dieser noch der Versender Kontrolle über die Verpackungseinheit, so dass die Möglichkeit besteht, diese zu verändern. Im Rahmen dieser Veränderung kann es nicht nur dazu kommen, das Verpackungsgegenstände der Verpackungseinheit entnommen und weggebracht werden. Vielmehr ist auch die Fallgestaltung denkbar, bei welcher beispielsweise ein bestimmter Verpackungsgegenstand aus der Verpackungseinheit entnommen und durch einen Verpackungsgegenstand mit gleichem Aussehen ersetzt wird, dessen Inhalt zu einer Gefährdung der mit dem weiteren Transport der Verpackungseinheit befassten Personen und/oder deren Abnehmer führen kann.

Die vorliegende Erfindung betrifft insbesondere ein Verfahren wie es aus der DE 10 2009 022 239.1 der vorliegenden Anmelderin bekannt ist und bei welchem eine Markierung als Teil der Verpackungseinheit vorgesehen wird, welche vor dem Inverkehrbringen der Verpackungseinheit erfasst und abgespeichert wird. Am Ankunftsort der Verpackungseinheit kann diese gespeicherte Markierung mit der tatsächlichen Markierung der Verpackungseinheit verglichen werden, um zu überprüfen, ob gegebenenfalls eine Manipulation der Verpackungseinheit auf dem Weg zwischen dem Hersteller der Verpackungseinheit und dem Empfänger stattgefunden hat.

Der vorliegenden Erfindung liegt das Problem zugrunde, eine Vorrichtung sowie ein Verfahren anzugeben, welche die einfache und kostengünstige Herstellung von Verpackungseinheiten erlaubt und mit hoher Sicherheit das Erkennen von Manipulationen an der Verpackungseinheit ermöglicht.

Zur Lösung dieser Aufgabe wird mit der vorliegenden Erfindung eine Vorrichtung mit den Merkmalen von Anspruch 1 vorgeschlagen. Diese Vorrichtung hat einen Zufallsgenerator zum Generieren und Speichern eines zufälligen Musters sowie eine Einrichtung, welche das Muster auf die Folie üblicherweise nach Umhüllen des Gutstapels mit der Folie aufbringt. Bei dieser Ausgestaltung ist es möglich, auf eine separate optische Einrichtung zum Erkennen des Musters an demjenigen Ort, an dem der umhüllte Gutstapel hergestellt wird, zu verzichten. Vielmehr werden die das zufällige Muster repräsentierenden Daten unmittelbar gespeichert zur Charakterisierung des Musters und Überprüfen des Musters und damit der Verpackungseinheit auf Manipulation beim Empfänger. Lediglich beim Empfänger muss ein separates Erkennungsgerät zum Aufnehmen des Musters vorgesehen sein, welches das auf der Folie aufgebrachte Muster erkennt und mit den hinterlegten Daten vergleicht um zu prüfen, ob eine Manipulation an der Verpackungseinheit stattgefunden hat.

So umfasst die Erfindung vorzugsweise eine Vergleichseinrichtung und eine Aufnahmeeinrichtung, die in einer eigenständigen Vorrichtung beim Empfänger der Verpackungseinheit installiert sind, wobei die Aufnahmeeinrichtung zur optischen Aufnahme der Markierung geeignet ist und die Vergleichseinrichtung eine Schnittstelle zum Empfang von Daten zu dem abgespeicherten Muster sowie einen Algorithmus zum Vergleich der Daten zu dem abgespeicherten Muster mit den Daten der optisch aufgenommenen Markierung enthält.

Nach einem alternativen Aspekt der vorliegenden Erfindung umfasst die Vorrichtung eine Schweißeinrichtung zur Befestigung eines Kodierungsstreifens an dem Folienschlauch vor dem Überziehen desselben über den Gutstapel. Die Schweißeinrichtung hat hierzu eine in eine Seitenfalte eines zugeführten Schlauchmaterials eingreifende Halteplatte üblicherweise normal zu deren Ebene beweglich. Hierzu ist eine Schweißbacke vorgesehen, welche gegenüber der Halteplatte an diese unter Zwischenlage einer der Seitenfalten des Schlauchmaterials anlegbar ist, um einen Markierungsträger beispielsweise in Form eines Kodierungsstreifens aus Kunststofffolie, an das Schlauchmaterial anzuschweißen. Diese Ausgestaltung bietet die Möglichkeit, Markierungsträger verschiedenster Art an dem Kunststoffmaterial der Umhüllung anzubringen, so dass beliebige Kodierungsstreifen mit dem Folienmaterial verbunden werden können.

Gemäß einer bevorzugten Weiterbildung ist der Halteplatte eine Kühleinrichtung zugeordnet, die eine gleichmäßige Temperierung der Halteplatte erlaubt. Dadurch ist es möglich, den Schweißprozess bei vorbestimmten Temperaturen auf Seiten der Folie durchzuführen und insbesondere eine Überhitzung der Folie zu vermeiden.

Die Halteplatte und die Schweißbacke können unmittelbar der Einrichtung zum Umhüllen des Gutstapels zugeordnet sein. Bei dieser ist üblicherweise bodennah der Folienvorrat vorgesehen, wohingegen die Vorbereitung des Folienschlauches zur Ausbildung einer über den Gutstapel gezogenen Schlauchhaube im oberen Bereich der Vorrichtung durch Aufspreizen, Abschneiden und Querversiegeln erfolgt. So kann die Halteplatte in die Seitenfalte auf dem Weg der Folie nach oben eingebracht werden. Alternativ können die Halteplatte und die Schweißbacke auch im Bereich der Schneid- und Querschweißeinrichtung vorgesehen sein.

Mit Blick auf das verfahrensmäßige Problem wird mit der vorliegenden Erfindung ein Verfahren mit den Merkmalen von Anspruch 5 vorgeschlagen, dessen Wesenszüge bereits zuvor erläutert worden sind.

Das Mittel zur Erzeugung einer Markierung kann ein Lasergerät sein, dessen Bewegung zur Aufbringung einer bestimmten Markierung an der Folie führt.

Mit einem nebengeordneten Aspekt schlägt die vorliegende Erfindung ein Verfahren mit den Merkmalen von Anspruch 6 vor. Bei diesem wird eine Folie zur Umhüllung des Gutstapels verwendet, in die wenigstens ein Farbstoff eingebracht ist. Vorzugsweise ist der Farbstoff in Form eines Farbmusters in die Folie eingebracht. Das Einbringen des Farbstoffs erfolgt als Farbkodierung vorzugsweise bereits beim Herstellen der Folie. Nach dem Umhüllen des Gutstapels wird bei dem erfindungsgemäßen Verfahren das Farbmuster mittels eines optischen Erkennungsgerätes aufgenommen und abgespeichert. Beim Empfänger erlaubt ein Vergleich zwischen diesen gespeicherten Daten zu dem Farbmuster und einem beim Empfänger erneut erfassten Abbild des Farbmusters eine Aussage, ob eine Manipulation an der Verpackungseinheit stattgefunden hat.

Nach einer weiteren alternativen Ausgestaltung wird zur Kodierung einer bestimmten Verpackungseinheit ein Flächenelement verwendet, in dem Späne eingebettet sind. Dieses Flächenelement wird vorzugsweise an der Folie befestigt, beispielsweise vor dem Umhüllen des Gutstapels. Alternativ kann das Flächenelement auch nach dem Umhüllen an der Folie befestigt insbesondere angeschweißt werden. Sofern das Flächenelement vor dem Umhüllen mit der Folie verbunden wird, unterliegt das Flächenelement üblicherweise beim Überziehen der Folie über den Gutstapel einer gewissen Quer- bzw. Längsdehnung, so dass erst nach dem Überziehen ein durch die Späne gebildetes Muster gegeben ist, welches mit einem optischen Erkennungsgerät aufgenommen und abgespeichert wird. Beim Empfänger erfolgt eine erneute Aufnahme des Musters und ein Vergleich, ob die von dem Versender der Verpackungseinheit übermittelten Daten zu dem Muster das an der Verpackungseinheit beim Empfänger vorgesehene Muster zutreffend wiedergeben.

Als Späne kommen insbesondere solche bevorzugt zum Einsatz, die als Industrieabfälle bei der spanhebenden Bearbeitung anfallen. Diese Späne werden vorzugsweise mittels Extrusion in dem Flächenelement ausgebreitet. Hierzu werden die Späne als Füllstoff in einen transparenten Kunststoff eingebracht, welcher regelmäßig in einer Breitschlitzdüse zu einem Kodierungsstreifen extrudiert wird. Der Kodierungsstreifen wird nachfolgend vorzugsweise auf Länge geschnitten, um einzelne Flächenelemente auszubilden, die auf die Folie aufgebracht werden.

Danach wird das Flächenelement durch eine an sich bekannte Extrusion, beispielsweise durch eine Breitschlitzdüse hergestellt. Dabei kann die Folie ein Substrat ausbilden, auf welche der gefüllte transparente Kunststoff aufextrudiert und damit verbunden wird.

Bei der Herstellung des Kodierungsstreifens kann die Düsenbreite verändert werden, beispielsweise durch einen der Düse zugeordneten Schieber, mit dessen Hilfe der Düsenspalt verändert, gegebenenfalls auch verschlossen werden kann. Damit ist es möglich, eine Kodierung auch in der Höhe vorzunehmen, d. h. die höhenmäßige Ausgestaltung des Kodierungsstreifens zu verändern und insbesondere die Späne mehrlagig und einander schneidend vorzusehen.

Sofern erforderlich, kann der Kodierungsstreifen bzw. die auf Länge geschnittenen Flächenelemente über eine die Haftung verbessernde Zwischenschicht auf die Folie aufgebracht werden. Der die Späne enthaltende transparente Kunststoff kann transparent klar und/oder transparent eingefärbt ausgebildet sein. Auch die Farbe kann zusätzlich als Kodierung verwendet werden.

Die vorliegende Erfindung lässt sich indes davon leiten, dass Späne in einem transparenten Kunststoff in scharf abgegrenzter Kontur und automatisiert mit Bild gebenden Verfahren erfassbar sind, so dass die exakte Abbildung der Kodierung, d. h. der Anordnung und Ausgestaltung der einzelnen Späne innerhalb des Flächenelementes sicher und zuverlässig erfolgen kann. Dementsprechend ist es zu bevorzugen, die Kodierung allein durch die Späne, insbesondere die Größe und Anordnung der Späne in dem Flächenelement zu bewirken.

## Patentansprüche

1. Vorrichtung zum Herstellen einer mehrere zu einem Gutstapel gestapelte Verpackungsgegenstände umfassenden Verpackungseinheit, mit einer Einrichtung zum Umhüllen des Gutstapels umfassend eine Halterung für einen Folienvorrat und Mittel zum Abziehen einer vorbestimmten Länge an Folie für das Umhüllen des Gutstapels,
**gekennzeichnet durch**
einen Zufallsgenerator zum Generieren und Speichern eines zufälligen Musters und eine Einrichtung, welche dieses Muster als Markierung auf die Folie aufbringt.

2. System umfassend eine Vorrichtung nach Anspruch 1 und eine Vorrichtung, **gekennzeichnet durch** eine Vergleichseinrichtung und eine Aufnahmeeinrichtung zur Aufnahme der Markierung, wobei die Vergleichseinrichtung eine Schnittstelle zum Empfang von Daten zu dem abgespeicherten Muster und einen Algorithmus zum Vergleich der Daten zu dem abgespeicherten Muster mit Daten zu der optisch aufgenommenen Markierung umfasst.

3. Verfahren zum Herstellen einer mehrere zu einem Gutstapel gestapelte Verpackungsgegenstände umfassenden Verpackungseinheit, die mit wenigstens einer Folie umhüllt wird,
**dadurch gekennzeichnet,**
**dass** mit einem Zufallsgenerator Daten zur Erzeugung einer Markierung, welche auf die Folie aufgebracht wird, erzeugt werden, die an eine die Markierung erzeugende Einrichtung weitergeleitet und für einen späteren Vergleich der Markierung abgespeichert werden.

## Claims

1. Apparatus for producing a packaging unit which comprises a plurality of packaging articles that are stacked to form a stack of goods, comprising a device for wrapping the stack of goods comprising a holder for a film supply and means for drawing off a predetermined length of film for wrapping the stack of goods,
**characterized by**
a random generator for generating and storing a random pattern and a device which applies said pattern as a mark to the film.

2. System comprising an apparatus according to claim 1 and an apparatus, **characterized by** a comparing device and a recording device for recording the mark, wherein the comparing device comprises an interface for receiving data on the stored pattern and an algorithm for comparing the data on the stored pattern with data on the optically recorded mark.

3. Method for producing a packaging unit which comprises a plurality of packaging articles stacked to form a stack of goods, and which is wrapped with at least one film, **characterized in**
**that** data are generated with a random generator for producing a mark which is applied to the film, said data are sent to a device producing the mark and are stored for later comparison of the mark.

## Revendications

1. Agencement pour fabriquer une unité d'emballage constituée de plusieurs objets à emballer empilés en une pile de produits, comprenant un dispositif pour envelopper la pile de produits, qui englobe un support pour une réserve de film et des moyens pour dévider une longueur prédéterminée de film pour envelopper la pile de produits,
**caractérisé**
**par** un générateur aléatoire destiné à générer et mémoriser un modèle aléatoire, et un dispositif qui applique ce modèle en tant que marquage sur le film.

2. Système comprenant un agencement selon la revendication 1 et un agencement, **caractérisé par** un dispositif de comparaison et un dispositif de relevé pour assurer un relevé du marquage, le dispositif de comparaison comprenant une interface destinée à la réception de données concernant le modèle mémorisé, et un algorithme destiné à la comparaison des données concernant le modèle mémorisé avec des données concernant le marquage relevé par voie optique.

3. Procédé pour fabriquer une unité d'emballage, qui est constituée de plusieurs objets à emballer empilés en une pile de produits, et que l'on enveloppe avec au moins un film,
**caractérisé**
**en ce qu'**à l'aide d'un générateur aléatoire sont générées des données, qui sont destinées à la réalisation d'un marquage que l'on applique sur le film, et qui sont transmises à un dispositif réalisant le marquage et sont mémorisées pour une comparaison ultérieure du marquage.
